# EUROPEAN PATENT APPLICATION

(11) **EP 2 439 512 A1**
(43) Date of publication of application: **11.04.2012**
(21) Application number: 10185964.3
(22) Date of filing: 01.10.2010
(51) Int. Cl.: G01N 21/03, G01N 21/64, B01L 3/00

(54) **A device for holding a sample**

(71) Applicant: Aqsens Oy, 02150 Espoo (FI)
(72) Inventor: Törnkvist, Niklas, FI-02700 Kauniainen (FI); Hänninen, Pekka, FI-20810 Turku (FI)
(74) Representative: Brax, Matti Juhani

(57) **Abstract**

A device is provided for holding a sample for optical examination. The device comprises a body that defines a plurality of spots or wells. One or more non-specific interacting surfaces in the spots or wells are capable of non-specific binding of a said sample, a luminophore label, or their combination. A light conducting layer comprises material that is essentially non-transparent to optical excitation radiation and essentially transparent to optical luminescent radiation. A light input window couples luminescent light into said light conducting layer, and a light output window couples light out from said light conducting layer.

## Description

### TECHNICAL FIELD OF THE INVENTION

The invention relates to a device for holding a sample that is to be examined optically. Especially the invention relates to a device that comprises multiple spots or wells with interacting surfaces, for examining a sample utilising luminophore labels, such as fluorescent labels. In addition the invention relates to a method for manufacturing the device.

### BACKGROUND OF THE INVENTION

Different kinds of devices, such as binder arrays, have been used in the analysis of samples, such as biomolecular liquids. The basis of these binder arrays has been the production of a library of components on surfaces or production of e.g. ion sensitive/selective surfaces. When the array is allowed to be in contact with the sample with or without a label, components from the sample and/or the label may interact with the array creating a detectable fingerprint of interactions that describes the contents of the sample.

The devices according to known prior art typically comprise numbers of different kinds of spots or wells, into which the sample is introduced. The sample is typically introduced in liquid form with a luminophore label, but the luminophore material may also be contacted with the spot or well before introducing the sample. When the sample has come into contact with the spots or wells, the fingerprint of the sample can be detected for example by radiating the associated luminophore labels with certain excitation radiation and measuring and analysing the emission radiation emitted by said luminophore labels.

There are however some challenges related to the prior art methods for reading the devices, such as distinguishing the radiation used for excitation and radiation emitted by the excited label. The known systems utilise typically monochromator means to select and distinguish the wavelengths used for excitation and emitted by the luminophore labels. Another way used especially in time-resolved methods, as is described in US 2004/043502 A1, utilises a time-gated detector for measuring the intensity of the emission radiation.

Still another solution is described in US 2006/0055042, where a radiation source is located outside a measurement chamber where the sample is injected. The excitation radiation is injected through a semiconductor substrate into an internal cavity of the measurement chamber. For the detection of the luminescent radiation emitted by the luminescent substance, a plurality of radiation receivers are located on the semiconductor substrate with their detection side facing the internal cavity of the measurement chamber.

It is clear that use of the monochromators, numbers of radiation receivers and/or time-gated detectors with suitable controlling logic tends to make the system complex and expensive and in addition vulnerable to malfunctions. It has proven to be difficult to obtain a sufficient signal to noise ratio for the detectable radiation in prior art arrangements.

### SUMMARY OF THE INVENTION

An object of the invention is to alleviate and eliminate the problems and disadvantages relating to the prior art solutions. One object is to introduce a device for holding a sample so that the apparatus for reading said device can be made simple. Yet another object is to enable characterizing and/or recognizing a sample with high accuracy.

The objects of the invention can be achieved by the features of independent claims.

The invention relates to a device for holding a sample according to claim 1. In addition the invention relates to the use of the device according to claim 15.

According to an embodiment of the invention a device for holding a sample for optical examination may be an array or slide or a stick-like device, a body of which advantageously defines a plurality of (reaction) spots or wells where the sample to be determined can be introduced. Within one or more of said spots or wells are one or more non-specific interacting surfaces for the purpose of non-specifically binding said sample, a luminophore label, and/or a combination of the sample and said luminophore label. It should be noted that the luminophore label may be introduced to the spots or wells beforehand, at the same time with, or after the sample. The sample is advantageously introduced in liquid form, either as such or appropriately diluted in a dilution medium, optionally comprising at least one labelling reactant with a luminophore label. After introducing said sample to the spots or wells the sample is allowed to react with the interacting surfaces of the wells. In some cases the sample is allowed to dry, so that solvents and other volatile substances evaporate. In some cases the excess amounts of sample are even washed away from the spots or wells as a part of the preparatory measures.

The luminophore label means in this document any suitable label substance or compound, which can be used in the device of the invention. The luminophore label comprises a luminophore, i.e. a fluorophore or phosphor, or other luminescent material, which can be excited with an optical, electric, and/or chemical excitation signal. If electric excitation is used, the resulting emission of light is known as electroluminescence. Correspondingly if chemical excitation is used, the phenomenon is chemiluminescence.

At the time of writing this description it is believed that using electromagnetic radiation to excitate the luminophore label(s) is a very advantageous choice. Excitation is performed with specific wavelength of radiation, after which the luminophore re-emits energy at a different (but equally specific) wavelength. It has preferably a relatively long emission lifetime (at least nanoseconds, but even several hundreds of microseconds depending on the material used). As an example the luminophore label may be selected from the group comprising coumarins, rhodamines, cyanines, boron-dipyrromethenes, lanthanide compounds, preferably chelates and cryptates, porphyrins, metalloporphyrins, fluorescent proteins, fluorescent polymers, particulate labels, preferably quantum dots, luminescent crystals and luminescent polymer particles, and any combination thereof. It should be noted that also two or more luminophore labels may be used in determination of the sample either simultaneously or in sequence.

Typically the optically excitated luminophore label exhibits a difference of at least several tens of nanometers (Stokes shift) between the most effectively absorbed excitation wavelength and the characteristic emission wavelength, whereupon it is easy to detect and whereupon the emission peak is easier to determine in relation to excitation wavelength. As an example the luminophore in the luminophore label may be europium, samarium, terbium, and/or dysprosium. It should be noted that the invention is however not limited only to those substances mentioned.

According to an embodiment the luminophore is selected such that it is fluorescent or shows delayed fluorescence or phosphorescence upon excitation with suitable wavelength light. The luminophore may also be a combination or a mixture of a fluorescent substance and a substance exhibiting delayed luminescence upon excitation with light of suitable wavelength.

According to an embodiment of the invention the device has an optical function. Thus, in addition to constituting a mechanical carrier and physically defining the spots or wells, the device has a role in handling the optical radiation that constitutes a vehicle for obtaining information of the sample in the spots or wells. Said role is most advantageously associated with the task of collecting emission radiation from a plurality of spots or wells and directing the collected emission radiation towards detection.

According to one embodiment, the device comprises a light conducting layer, the optical conductivity of which is however selective so that it comprises material that is essentially non-transparent to optical radiation used for excitation and essentially transparent to emission radiation originating within the spots or wells. To be exact, we may use the definition "optical radiation at a first wavelength that is capable of luminophore excitation" for the excitation radiation, and "optical radiation at a second wavelength" for the emission radiation. A light input window couples emission radiation originating from said spots or wells into said light conducting layer, and a light output window couples optical radiation out from the light conducting layer.

It is not necessary to have anything between the excitation radiation source and the sample in the spots or wells; the sample may be irradiated directly without anything therebetween. However, in many cases that may lead to excessive evaporation or unwanted interactions of components of the sample with ambient air, so it is advantageous to have in the device a structural layer that at least partly delimits the volume of the spots or wells, is essentially transparent to the excitation radiation, and in the measurement configuration comes between an excitation radiation source and a spot or well. Said structural layer may be the same as the body mentioned above, in which case the wells are illuminated from below, through the bottoms of the wells. As an alternative, the body may be constituted by the light-conducting layer, so that the light conducting layer defines the wells. In that case the other structural layer may act as a top cover, so that it covers the spots or wells defined by the light conducting layer. In the last-mentioned case the essential transparency for excitation radiation of the structural layer is utilized by illuminating the spots or wells from above, through the top cover.

It should be noted that the device may comprise any number of layers, which in various embodiments of the invention may have transmittivity characteristics similar to those of any of the layers mentioned above. It is possible to build a device according to an embodiment of the invention so that the spots or wells are completely defined by layers that are transparent to the excitation radiation, if a further layer in the propagation direction of the luminescent radiation acts as the light conducting layer mentioned above and is non-transparent to the excitation radiation.

As its name says, the light conducting layer is adapted to optically transmit the luminescent emission radiation to a radiation detector that is used in a reader apparatus to detect said emission radiation. The light conducting layer forms an optical path so that the emission radiation from the spots or wells can enter the light conducting layer to the light input window, and be directed in a desired manner to the light output window at an outer surface of the device, from where it can be further directed to the detector. Advantages may be gained by forming the second layer so that it guides emission radiation into a direction that differs significantly from the linear propagation direction of the excitation radiation. For example, if the device has a generally planar form defining a plane, and the excitation radiation comes at an essentially right angle against said plane, the light conducting layer may conduct the emission radiation in a direction within the plane to a light output window at or close to an edge of the device.

Using the light conducting layer this way as a light guide offers an additional advantage, because the length of the optical length through the light conducting layer can be made relatively long. Since the material is not transparent to the excitation radiation, it advantageously filters out the undesired radiation used for excitation the luminophore labels more effectively than if the optical path for the emission radiation would only pass right through the light conducting layer. At least one optical filter may be coupled with the light output window for filtering out at least one undesired wavelength.

If the interacting surfaces are within wells, in order to define the wells one or two of the appropriate layers (designated above as the light conducting layer and the structural layer) may comprise cavities or other spaces. When the layers are coupled with each other, the cavities or spaces form said plurality of wells, where said sample is introduced and let to interact with the surface of the well and/or luminophore label.

In order to facilitate the flow of a liquid sample into the spots or wells, at least one of the parts that define the spots or wells may define fluidic channels coupled to the spots or wells. At least one of the fluidic channels should have an opening at an outer surface of the device for allowing a liquid sample to flow from outside of the device into the spots or wells. It should be noted that the sample and/or label can be introduced to a dilution medium or liquid medium before introduction to the spots or wells and measurement of the emission radiation of the luminophore labels.

The layer that is essentially transparent to the excitation radiation comprises advantageously acrylate, such as polymethylmethacrylate (PMMA). The light conducting layer, which is essentially transparent to the emission radiation but non-transparent to the excitation radiation, comprises advantageously polycarbonate (PC). According to an exemplary embodiment the light conducting layer is non-transparent to optical radiation approximately in the 340-360 nm wavelength range, but transparent to optical radiation approximately in the 600-640 nm range. Correspondingly the structural layer that must allow excitation radiation to pass is in this example essentially transparent to optical radiation approximately in the 340-360 nm range. It should be noted that the materials described here are only exemplary and can be replaced with other materials with appropriate characteristic transparency wavelengths.

If fluidic channels are used, they may be built between the layers for example by providing an appropriate groove in the surface of at least one layer so that when the two layers are coupled with each other the groove between the layers forms the fluidic channels. The fluidic channels may be provided also otherwise, for example by applying an additional layer to the structure of the device, which additional layer already comprises said fluidic channels. The fluidic channels may be for example capillary channels, so that the sample is drawn to the spots or wells by capillary force.

According to an embodiment the device may comprise an internal space with a changeable internal volume, which is connected to the fluidic channels and coupled therethrough to a sample inlet opening. Suitably changing the volume of the internal space generates a low pressure in the fluidic channels in relation to the external (ambient) pressure, thus making the sample to flow in a desired direction inside the device. As an example the space can be formed between the two layers or inside the layer so that at least one surrounding layer of the space is flexible. Thus e.g. by pressing and releasing the surface or layer(s) of the device the device functions as a pipette. A similar drawing force may be generated by pulling a piston located in said internal space. Instead of or in addition to a drawing force, a pushing force may be generated by using an external pump or syringe to force a liquid sample to enter the device.

According to an embodiment the device may comprise a storage space, where the luminophore label is stored before use. In this embodiment the luminophore label stored in the storage space may be different than the luminophore label preparatorily introduced in at least one spot or well of the device. It is also possible that at least one spot or well does not comprise the luminophore label at all before the use of the device. In this embodiment said storage space is adapted to deliver the luminophore label stored therein to the spots or wells in association with the introduction of the sample into the spots or wells. The storage space may be located along a sample introduction route, so that the movement of the introduced sample through the fluidic channels draws the luminophore label along.

According to an embodiment the device may comprise a particle filter arranged in at least one fluidic channel for filtering out particles from the sample.

Above it was already said that at least a portion of the spots or wells comprise a non-specific interacting (binding) surface, which interacts non-specifically with the sample, luminophore label, and/or combination of the sample and label. Furthermore, according to an embodiment, at least some of the spots or wells may comprise a specific interacting (binding) surface, which interacts specifically with the sample, luminophore label, and/or combination of the sample and label.

According to an embodiment an essential portion, i.e. at least 10 %, preferably at least 30 %, and even more preferably at least 50 % of the interacting surfaces of the spots or wells of the device are selected from groups of interacting surfaces selected from peptides, proteins, detergents, surfactants, carbohydrates and/or derivatives, and polymers, the polymer being optionally physically treated or chemically treated with an acid, base and/or solvent. The interacting surface may for example comprise or be treated with an acid or sugar.

According to an exemplary embodiment the device comprises at least three interacting surfaces, two of which comprise similar types of interacting surfaces. In addition, according to an embodiment the device comprises a plurality of interacting surfaces of the same basic type, but with different binding strength. The interacting force, such as a binding force, may be adapted to change gradually or continuously between certain minimum and maximum interacting force values. This can be achieved e.g. by changing the thickness, density or concentration of the interacting surfaces. According to an embodiment the device may comprise a plurality of interacting surfaces, the type of which is adapted to change gradually or continuously from one type to another type. The device having interacting surfaces with changing interacting property may be used for detecting more fine-grained fingerprints, since much smaller differences with interacting properties of different samples and/or labelling reactants can be detected.

In a spot or well that comprises a luminophore or fluorescence label, the label can be for example coated onto the surface of the spot, or the cavity forming said well, or coupled with the surface via an antibody ("Y").

Still according to an embodiment a part of the device that is coincident with a spot or well and transparent to optical radiation at at least one wavelength may define a lens. Depending on its location in relation to the excitation radiation source and the propagation direction of emission radiation, the lens may be used for focusing optical radiation either directed to or originating from the corresponding spot or well. For example, the upper cover layer and/or the light conduction layer may comprise an array of lenses, each of which coincides with a spot or well.

According to an embodiment at least one portion of the interacting surface of the spot or well, such as a cavity forming the well, comprises first interacting means interacting with the sample. The first interacting means are advantageously antibodies ("Y") for binding antigen of the sample, whereupon the binding is very specific. According to the embodiment at least one another portion of the interacting surface of the spot or well (advantageously another cavity of said two cavities forming a well) comprises either (coated onto the wall/surface of the cavity)
a) labeled first interacting means, such as labeled antibodies ("Y^{e}") for binding the antigen of the sample. The antibody is advantageously labeled with the luminophore label. The process is non-competitive and very specific (immunometric assay), where the antigen of the sample (N) binds and dissolves the labeled antibody ("Y^{e}") and the N+Y^{e} binds to the antibody (Y) arranged into the other surface of the well. The process gives a positive feedback (signal is increasing), so more the sample or its antigen the stronger signal is obtained,
   or
b) labeled second interacting means, such as labeled antigen ("X") for binding to antibody of the other cavity. The antigen is advantageously labeled with the luminophore label. The process is competitive and not so sensitive, where the sample (N) dissolves the labeled antigen ("X^{e}") and the N and X^{e} competitively (not together) tend to bind to the antibodies ("Y") arranged into the other surface of the well. The process gives a negative feedback (signal is decreasing), so more the sample or its antigen the weaker signal is obtained.

The non-competitive assay is more sensitive to the content of the sample than the competitive assay, because the signal of the zero level is zero. In the competitive assay the high signal at the zero level causes high variations, whereupon quite high changes in the concentrations of the sample is needed to deviate the signal from the zero level.

According to an advantageous embodiment the device comprises at least two different interacting surfaces for characterizing and/or determining the sample. Advantageously at least one of the surfaces comprises a non-specific interacting material. The non-specific interacting material advantageously non-specifically interacts with the sample, at least one labelling reactant, and/or combination of the sample and at least one labelling reactant. In the embodiment the sample and at least one labelling reactant is introduced to said interacting surfaces of the spots or wells of said device, such as e.g. letting them in contact with said interacting surfaces. The labelling reactant may bind to the surface either as such or in combination with said sample. It is also possible that the label does not bind to the surface or the sample will dissolve and remove it from the interacting surface.

### DEFINITIONS

In this disclosure, the term device refers to a mechanical entity that is used to hold a sample and to offer the sample a variety of different interacting surfaces, such as binding surfaces, located in spots or wells. Typically not all interacting surfaces of the device, i.e. elements of the spots or wells of the device, are identical. However, the device can, and in many preferred embodiments does, comprise, in addition to a plurality of different interacting surfaces, also a number of mutually similar interacting surfaces.

In the context the term interacting surface or binding surface shall be understood to refer to any surface or surfaces that form a coated or modified optically readable and identifiable area with the potential of interacting, such as binding analytes to be characterized and/or determined. Thus each interacting surfaces typically comprises an area of at least 200 nm (nanometer) in diameter and up to 100 mm² (square millimetres). In many preferred embodiments the diameter is from 0.01 to 10 mm, in more preferred embodiments from 0.5 to 3 mm in diameter. If each interacting surface is that of a particle, the preferred diameter of the particle is from 200 nm to 20 µm (micrometer) and a more preferred diameter from 1 to 5 µm. It should be noted that the sample and/or labelling reactant advantageously interact somehow with the interacting surface, such as change the concentrations of the label in the interacting surface or portion of the spot or well. According to an embodiment sample and/or labelling reactant may bind e.g. chemically to the interacting surface, whereupon the term binding surface may be used. The binding and thus the existence of the label in the interacting surface can be determined by the time-resolved technique based on the excitation of the luminophore label and measuring the emission peak of the label after the excitation when the label is returning to its ground state.

It is clear to the skilled in art that the surface area may in some cases be smaller or larger than described above.

The term analyte or analytes refers, in the context, to any constituent of the sample to be characterized and/or determined, which constituent contributes to the fingerprint of the sample in any specific embodiment of the invention.

The term plurality shall be understood to mean more than one, preferably at least three, more preferably at least ten, even more preferably at least 30. It is clear for the person skilled in the art that in some preferred embodiments the term plurality can even refer to more than 100, 300, or 1000.

The term sample shall, in the context, be understood to cover any sample to be characterized and/or determined. The sample may be in liquid medium or form, preferably as such, or transformable into liquid form by dissolving it in a dilution medium. The sample typically comprises at least 100 nl but not more than 10 ml. The sample size is preferably from 1 µl to 1 ml, more preferably from 3 µl to 300 µl and most preferably from 10 µl to 100 µl.

The term dilution medium refers, in the context, to any liquid medium suitable for dilution of the sample in a particular embodiment of the invention. Typically the dilution medium is an aqueous buffer.

The term luminophore label refers to a label that comprises a luminophore, i.e. inorganic or organic luminescent matter.

The term luminophore refers to an atom, group or particulate, i.e. of a luminophore label, that manifests luminescence and detection of the label accordingly consists of measuring the luminescence of the luminophore. Luminophores comprise e.g. of fluorophores, phosphors, but also conjugated pi systems and transition metal complexes. Luminophores preferred in embodiments of the present invention can be selected from the group consisting of coumarins, rhodamines, cyanines, boron-dipyrromethenes, lanthanide compounds (such as chelates and cryptates), porphyrins, metalloporphyrins, fluorescent proteins, fluorescent polymers, particulate labels (such as quantum dots, luminescent crystals and luminescent polymer particles). Luminophore may also be understood as a complex that is formed of a luminescent molecule or particle as defined above and non-luminescent molecules or molecular complexes.

The terms detect and detecting shall be understood, in the context, to refer to any applicable measurement of luminescence of interacting surfaces of the wells of the device. Measurement can be accomplished e.g. using a luminescence plate reader, a dedicated luminescence device reader, a flow luminometric device and/or an automated imaging device.

The term fingerprint refers, in the context, to the array of results obtained through detection, i.e. measurement, of the plurality of different interacting surfaces of the device measured in any embodiment of the invention. If an embodiment of the present invention involves also a plurality of identical interacting surfaces and more than one of these are detected, the fingerprint can comprise all the results of the identical interacting surfaces or alternatively only a representative value, e.g. average, median, mode of the measurements of identical interacting surfaces or any combination thereof. A fingerprint can further refer to a profile of measured luminescent intensities subjected to numerical processing with an appropriate algorithm and in many preferred alternatives measured luminescent intensities of the interacting surfaces of the device are subjected to numerical processing by an appropriate algorithm before comparison with fingerprints of corresponding devices without a sample and/or known samples.

The term corresponding sample or corresponding samples refer to samples that are believed to be virtually identical, highly similar or at least reasonably similar to those characterized and/or determined. This belief of similarity can be due to e.g. origin, i.e. relating to the same or a corresponding process or product, or classification.

The term known samples refers to any samples which composition is known in detail or is fully characterized.

The terms non-specific interacting means or non-specific binder refers e.g. to a binder or binders that are, in the context of a specific embodiment of the present invention, not specific: the selectivity of the binding is not predetermined. Accordingly a binder, which in some other context is a specific binder, might, in the context of the present invention be a non-specific binder due to that binding in the context of the present invention is not specific. Preferably the non-specific binder or binders of the present invention are not specific binders in any context.

The terms specific interacting means or specific binder refers e.g. to a binder that is specific or binders that are specific. A specific binder comprises a molecular recognition element or elements that bind to an epitope of the analyte bound. In the context of this invention a specific binder only binds to similar epitopes, i.e. epitopes that are chemically and structurally similar. A specific binder does not bind to more than 10, preferably not more than 3, chemically and conformationally non-identical different epitopes. Most preferably a specific binder only binds to one specific epitope.

In the contest of this invention the term bind refers to binding wherein the binding constant is at least 10³ M⁻¹, preferably at least 10⁵ M⁻¹, more preferably at least 10⁷ M⁻¹ and most preferably at least 10⁹ M⁻¹.

The exemplary embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

The device according to the invention has significant advantages in relation to the prior art. For example simpler reader devices with lesser components can be manufactured and used. The measurement procedure by the device according to the invention itself may be a simple dip-and-read type test, which is very fast but still accurate. The time-resolved fluorescence (TRF), the sensing technology used by the embodiments of the invention, gives sensitivity down to attomolar levels (sensing to approximately 1*10⁻¹⁵ concentrations) which can be compared to most electronic nose technologies based on semiconductor technologies which can achieve 1*10⁻⁶ concentrations ie. 1/1,000,000,000 times less sensitive than the embodiments of the invention.

The invention employs devices with specific and non-specific surfaces. The main difference between specific and non-specific sensing is that a non-specific approach can detect differences in any unknown sample -whether it contains the predicted substances or not. If e.g. 49 specific sensors that can measure individual properties from 1-1000 are combined, this results in a maximum of 49,000 different combinations for the analyte. With the non-specific approach utilized by the embodiments of the invention, the result of every single non-specific sensor yield information that can be used together with the other sensors, means that 49 non-specific sensors read from 0-1000 mean that the maximum combinations are 1*10¹⁴⁹. The combination of non-specific sensing with time-resolved fluorometry means almost single-molecule sensitivity with virtually endless combinations all embedded in a simple disposable test slide or device.

The invention can be used for characterizing and/or determining different kinds of samples, but also for "profiling" virtually any samples, such as liquids. In addition the technology works very well both in comparative analysis and detection of differences in samples which suggests that the natural applications are in authenticity and safety.

The use of a light conducting layer that is non-transparent to the excitation radiation helps to protect the optical detectors of the reader device with which the luminescent emission radiation will be detected. Even if the detection of luminescence would be time-gated, so that the detectors are only activated after the excitation radiation source has been switched off, in their passive state they would still be exposed to the excitation radiation pulse that is bright enough to potentially harm the detectors. This problem is underlined by the use of non-specific interaction surfaces in the wells, because non-specific interactions typically give rise to a wider dynamic range of emission radiation to be detected, which in turn allows (or even requires) the use of more sensitive detectors.

Rayleigh and especially Raman scattering of the excitation radiation are further reasons that advocate time-gating. Raman scattering involves a Stokes shift due to the inelastic scattering mechanism, and is thus susceptible of introducing interference to such fluorometric measurements where the detector is active simultaneously with the introduction of optical excitation. It is believed that Raman scattering will set an absolute limit of about 10⁻¹⁰ M to the sensitivity of simultaneous fluorometric measurements irrespective of how advanced the measurement apparatus is.

Having the sample spots or wells defined by a piece of material that is non-transparent to excitation radiation helps to reduce excitation radiation crosstalk: if excitation radiation is meant to fall on individual sample spots or wells separately, stray excitation should be kept from reaching those sample spots or wells that should be left unexcited by that radiation pulse.

### BRIEF DESCRIPTION OF THE DRAWINGS

Next the invention will be described in greater detail with reference to exemplary embodiments in accordance with the accompanying drawings, in which
Figure 1 illustrates an exemplary device according to an advantageous embodiment of the invention,
Figure 2 illustrates a second exemplary device according to an advantageous embodiment of the invention,
Figure 3 illustrates a third exemplary device according to an advantageous embodiment of the invention,
Figure 4 illustrates a fourth exemplary device according to an advantageous embodiment of the invention,
Figure 5 illustrates a fifth exemplary device according to an advantageous embodiment of the invention,
Figure 6 illustrates a sixth exemplary device according to an advantageous embodiment of the invention,
Figure 7 illustrates a seventh exemplary device according to an advantageous embodiment of the invention,
Figure 8 illustrates an exemplary device comprising antibodies and labeled antibodies in the interacting surfaces according to an advantageous embodiment of the invention,
Figure 9 illustrates an exemplary device comprising antibodies and labeled antigen in the interacting surfaces according to an advantageous embodiment of the invention,
Figures 10A-C illustrate exemplary devices with exemplary fluidic channels according to an advantageous embodiment of the invention,
Figure 11 illustrates an exemplary principle of an exemplary method for characterizing and/or determining a sample with the device according to an advantageous embodiment of the invention,
Figure 12A illustrates an exemplary principle of the device according to an exemplary embodiment of the invention,
Figure 12B illustrates a schematic view of still another exemplary apparatus according to an advantageous embodiment of the invention, and
Figure 13 illustrates an exemplary principle of the method for utilising time-resolved measurement according to an exemplary embodiment of the invention.

### DETAILED DESCRIPTION

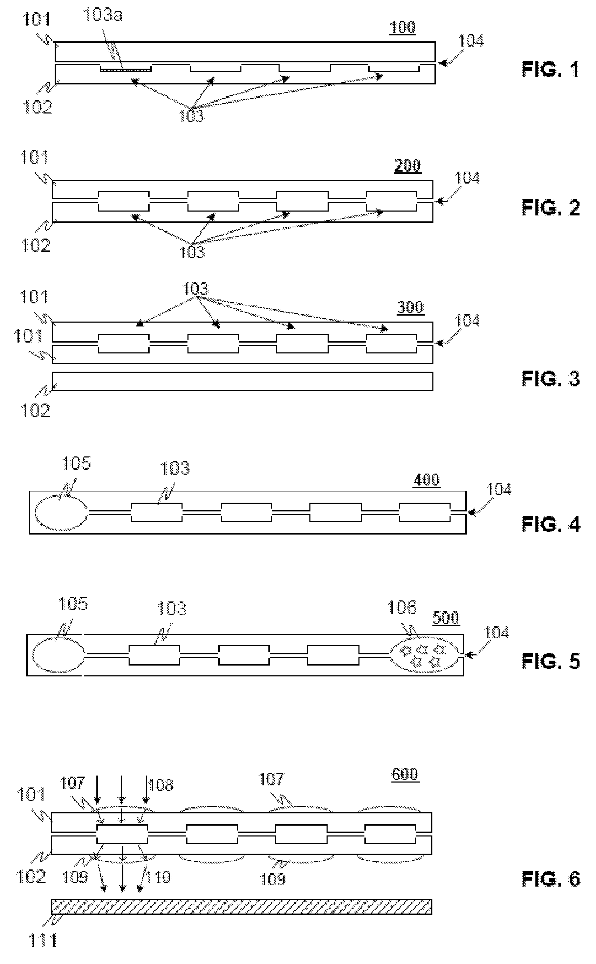

Figure 1 illustrates an exemplary device 100 according to an advantageous embodiment of the invention, where the device comprises two layers 101 and 102. The layer 101 may be called the first layer, and it corresponds to the previously mentioned structural layer that is essentially (optically) transparent to excitation radiation. The layer 102 may be called the second layer, and it corresponds to the previously mentioned light conduction layer that is essentially (optically) non-transparent to the excitation radiation used, but essentially (optically) transparent to the emission radiation of the excited luminophore label. In addition the device 100 comprises cavities forming a plurality of wells 103. The cavities comprise surfaces 103a, at least portions of which have been treated to form interactive surfaces, advantageously both specific and non-specific ones, as is discussed elsewhere in this document. The device comprises also a fluidic channel 104 formed advantageously between the layers 101, 102.

The dimensions illustrated in Figure 1 are not to scale. For example, since the first layer 101 has few more tasks than to act as the cover that delimits the volume of the wells from above, and since it should allow illuminating the wells with the excitation radiation as effectively as possible, the first layer 101 may be very thin, with only the sufficient mechanical strength and stiffness to enable using it as a cover for the wells.

The light input window for coupling luminescent emission radiation into the layer 102 consists of those parts of its upper surface that define the spots or wells. Thus in this case the light input window is not continuous but consists of an array of light input window patches, each of which coincides with a spot or well. Depending on the configuration of the reader apparatus, the light output window for coupling light out from the layer 102 may be either at its planar lower surface or at one of its edges.

Figure 2 illustrates a second exemplary device 200 according to an advantageous embodiment of the invention, where the device comprises two layers as the device 100 described in connection with Figure 1. In principle the device 200 is very analogous to the device 100, but the device 200 comprises cavities formed into both layers 101, 102 so that when the layers are connected to each other, the cavities form a plurality of wells 103. The cavities may be treated similarly as the cavities of the device 100. Also the considerations concerning the light input window and the light output window are similar to those made in association with Figure 1.

Both in Figure 1 and in Figure 2 the roles of the layers could be switched. In other words, the lower layer could be the so-called structural layer, so that the structural layer would define the spots or wells, and the upper layer could be the light conducting layer. In the illustrated configuration it is assumed that the illumination comes from above, but if the roles of the layers would be switched, also the direction of illumination should change so that the wells would be illuminated from below, through the layer that is transparent to the excitation radiation.

Figure 3 illustrates a third exemplary device according to an advantageous embodiment of the invention, where the device 300 comprises two layers of the first type 101, between which the wells 103 are provided. The second layer 102, which is the light conduction layer, is provided separately (e.g. not in physical contact with the wells 103) and - looked from the wells - is located in a direction into which luminescent emission radiation originating from the wells should be conducted on its way to detection.

In the embodiment of Figure 3 the whole upper surface of the light conducting layer 102 constitutes a light input window. The light output window may be located at the lower surface or at some edge of the light conducting layer 102.

Figure 4 illustrates a fourth exemplary device 400 according to an advantageous embodiment of the invention, where the device further comprises an internal space 105 coupled to an opening at an outer surface of the device (here: at the rightmost end) through the fluidic channels 104. The changeable volume of the space is adapted to provide changeable pressure to the fluidic channels making the sample to flow inside the device, advantageously via the fluidic channels into the spots or wells 103.

Figure 5 illustrates a fifth exemplary device 500 according to an advantageous embodiment of the invention, where the device comprises a storage space 106 comprising the luminophore label, illustrated with star signs. The luminophore label will be introduced into the wells advantageously via the fluidic channels 104 when the sample flows via the fluidic channels 104 and through the space 106. It should be noted that in other embodiments the luminophore labels are either provided into the wells beforehand or then introduced with the flowing sample. In an exemplary embodiment the label can be for example coated onto the surface of the spot or well or the cavity forming the well.

Figure 6 illustrates a sixth exemplary device 600 according to an advantageous embodiment of the invention, where a part of the layer 101 that is coincident with a spot or well comprises a lens 107 for focusing the excitation radiation 108 to the spots or wells 103. In addition a part of the layer 102 that is coincident with a well comprises a lens 109 for focusing the emission radiation 110 towards emission radiation detecting means, which here is shown schematically with the reference designator 111. The device may either comprise lenses only in one layer or both layers, depending on the embodiment.

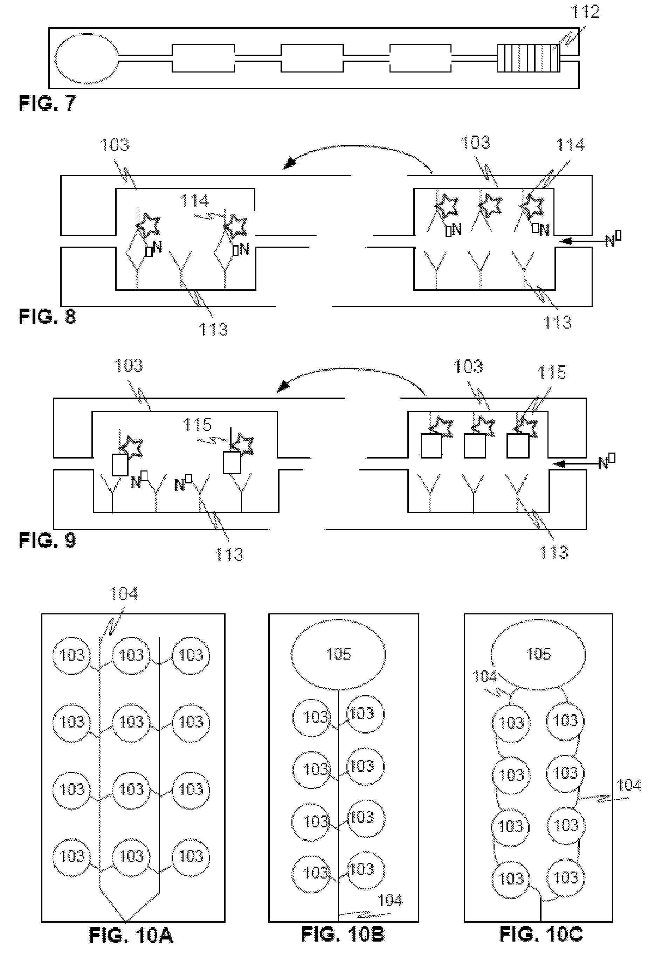

Figure 7 illustrates a seventh exemplary device 700 according to an advantageous embodiment of the invention, where the device comprises also a particle filter 112 in at least one of the fluidic channels 104 for filtering particles of the sample. The filter may function based on capillary forces, for example to separate blood platelets from blood samples. Since a typical particle filter is basically a mechanical device, it introduces friction to the flow of a sample into the spots or wells. For this reason it is often advisable to combine the use of a particle filter with a pump or syringe, with which the sample is forced into the device.

Figure 8 illustrates an exemplary device 800 comprising antibodies ("Y") 113 and labeled antibodies ("Ystar") 114 in the interacting surfaces of the wells 103 according to an advantageous embodiment of the invention. In addition Figure 9 illustrates an exemplary device 900 comprising antibodies ("Y") 113 and labeled antigens ("square") 115 in the interacting surfaces of the wells 103 according to an advantageous embodiment of the invention. The antibodies ("Y") 113 bind advantageously to antigens of the sample ("Nsquare").

According to the embodiment illustrated in Figure 8 the other portion of the interacting surface of the well 103 (advantageously another cavity of said two cavities forming the well) comprises the labeled antibodies ("Ystar") 114 for binding the antigen of the sample ("Nsquare"). The antibody is advantageously labeled with the luminophore label (star). In the process the antigen of the sample ("Nsquare") binds and dissolves the labeled antibody ("Ystar") 114 and the ("Nsquare+Ystar") binds to the antibody (Y) 113 arranged into other the surface of the well 103.

According to the embodiment illustrated in Figure 9 the other portion of the interacting surface of the well 103 (advantageously another cavity of said two cavities forming the well) comprises the labeled antigen ("square") 115 for binding to the antibody 113 of the other cavity. The antigen is advantageously labeled with the luminophore label (star). In the process the sample (Nsquare) dissolves the labeled antigen ("square star") 115 and the Nsquare and square star competitively (not together) tend to bind to the antibodies ("Y") 113 arranged into the other surface of the well 103.

The antibodies, labeled antibodies as well as labeled antigens are advantageously coated onto the surfaces of the cavities forming the wells 103.

Figures 10A-C illustrate exemplary devices with exemplary fluidic channels 104 according to an advantageous embodiment of the invention, via which the sample is introduced into the spots or wells 103. In the device described in Figure 10A the sample can be introduced into the spots or wells mainly or only by capillary forces. The devices depicted in Figures 10B and 10C both comprise the pipette-like internal spaces 105 providing changeable pressure to the fluidic channels and thereby making the sample to flow inside the device via the fluidic channels 104 into the spots or wells 103. In Figure 10B there is a main fluidic channel 104 from which the sample is led to the spots or wells by capillary forces via additional fluidic channels. In Figure 10C the network of fluidic channels 104 is connected to the internal space 105 at one end, but the liquid sample is adapted to travel via said spots or wells 103 from one to the other, when the pipette-like internal space is operated to create the appropriate pressure difference.

A device that implements the principle illustrated in Figure 10C, i.e. fluidic channels that connect at least a number of spots or wells to a chain, can be very useful in applying the invention to a chromatography type measurement. The interesting feature is the chain of spots or wells, irrespective of whether the pipette-like operation is aimed at (i.e. irrespective of whether the device has the internal space with changeable volume or not). Introducing a sample in liquid form to such a device means making the sample flow through a series of spots or wells before it reaches the last spot or well in the chain. The previous spots or wells in the chain may comprise interacting surfaces that change the composition of the sample on the way, for example by essentially removing some fractions from the sample through binding or other reactions. Such automatic processing of the sample within the device may be very useful for example in measuring samples in which the small concentration of an interesting component might otherwise remain masked by some other, more readily measurable constituents.

For selectively removing fractions, interacting surfaces of different types are typically used along the chain of spots or wells. It is also possible to have the same interacting surface repeated in a number of successive spots or wells in the chain. A chain of spots or wells with the same interacting surface constitutes a device the detection capability of which scales well for a large variety of small and large concentrations of a substance to be detected. If the concentration is small, essentially all of said substance will interact already in the first few spots or wells, from which it can be then detected while the spots or wells later in the chain show no result. If the concentration is large, the interacting surfaces of at least some of the first spots or wells may become saturated, allowing some of the substance in question to flow further in the chain.

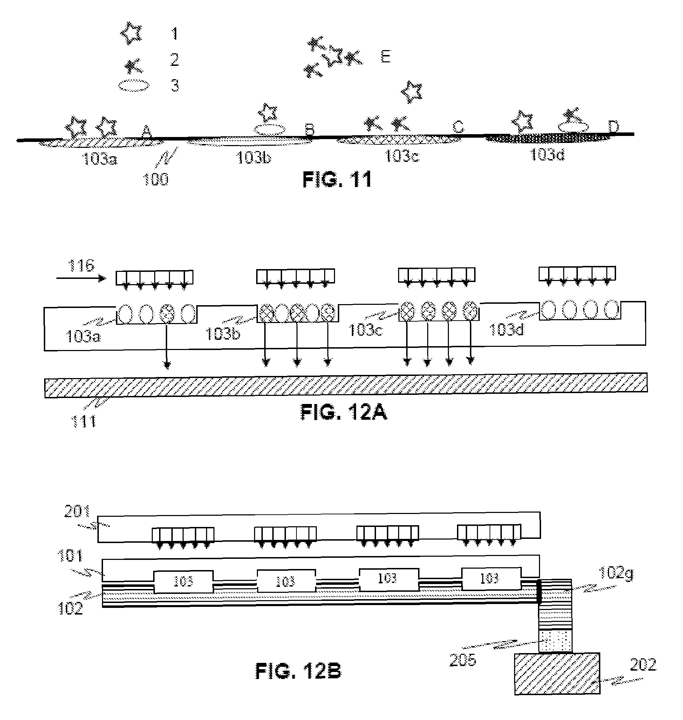

Figure 11 illustrates an exemplary principle of an exemplary method for characterizing and/or determining a sample with any device employing at least two of different interacting surfaces in the spots or wells of the device according to the embodiments of the invention. The surface spots marked with A, B, C, D represent differently coated or modified surfaces each forming a differently behaving non-specific interacting surface. The sample molecules (2, 3) may interact with the spots in different ways. In A the sample molecules do not react with the spots and only the label (1) will bind to the surface. In B the sample molecule reacts with both label (1) and surface bringing the label (1) in contact with the surface. In this case the label (1) does not bind to the non-specific component B. In C the sample molecules (2) prevent the binding of the label (1) to the surface. In D both sample molecules (2,3) and label bind to the surface. In E the sample molecules (2) bind to the label molecule (1) inhibiting the molecule to interact with any of the surfaces (A,B,C,D). In this example each of the surfaces has different type of the optically readable properties due to different interactions with the samples and/or label, whereupon a specific fingerprint can be determined for each case, as is additionally depicted in Figure 12.

Figure 12A illustrates an exemplary principle of the devices (any device depicted in this document) according to an exemplary embodiment of the invention, where the different kinds of interacting surfaces of the spots or wells 103a, 103b, 103c, 103d have interacted and bound the sample, at least one labelling reactant, and/or combination of the sample and at least one labelling reactant in different ways (at least portion of the wells are bound them non-specifically). Thus, when the wells having different amounts on bound samples or labelling reactants are exposed by the excitation radiation 116 to excite the bound luminophore labels, different intensities result depending on the amount of the luminophore label in each well. For example only one unit of photons are counted from well 103a as the luminophore label does not bind well to interacting surface of well 103a. However, three units of photons are counted from well 103b because the luminophore label and sample bind equally to the interacting surface of well 103b. Moreover, four units of photons are counted from well 103c as the luminophore label binds much better to the interacting surface of well 103c than sample. As an example, no photons are counted from well 103d as the sample binds much better to the interacting surface of well 103d than the luminophore label.

There are also other phenomena that may influence the emission from the sample wells (A,B,C,D). The sample may e.g. interact with the luminophore in a way that the emission from the luminophore may is enhanced or quenched. The enhancement or quenching may happen on the nonspecifically binding surface or in the solution. Several theoretical reasons for the enhancement or quenching can be found in prior art and can be considered known to persons skilled in the field of luminescence.

Figure 12B illustrates a schematic view of still another exemplary device according to an advantageous embodiment of the invention, where the light output window of the light conducting layer 102 is in particular at one of its edges (here the rightmost edge). Otherwise the device that is schematically illustrated in Figure 12B could correspond to any embodiment of the invention described in this document. The transparency of the light conducting layer 102 to luminescent emission radiation is utilized by using it as a light guide that conducts luminescent emission radiation within the plane defined by the planar form of the light conducting layer 102. The efficiency and directivity of the light guide can be enhanced by using reflective coating at those outer surfaces that are not meant to couple light out of the light conducting layer 102.

Excitation radiation comes from top to down in the orientation shown in Figure 12B, so if it was to also travel towards the light output window, it should first be diffracted to a 90 degrees angle and then propagate through what for most wells would be a significant portion of the length of the light conducting layer 102, the material of which is essentially non-transparent to the excitation radiation. Both these effects help to reduce the amount of excitation radiation that ever reaches the light output window.

In the embodiment of Figure 12B a further light guide 102g is used to conduct the emission radiation from the light output window towards a detector 202 in a reader apparatus. The further light guide 102g could quite as well be an integral part of the light conducting layer 102. Yet another feature shown in Figure 12B is an optical filter 205 coupled to the light output window (here: through the further light guide 102g) for filtering optical radiation that is coupled out from the light conducting layer. According to an embodiment the optical filter 205 can be adapted to transmit or block certain wavelengths, for example if two or more luminophore labels with different emission characters are used in the device.

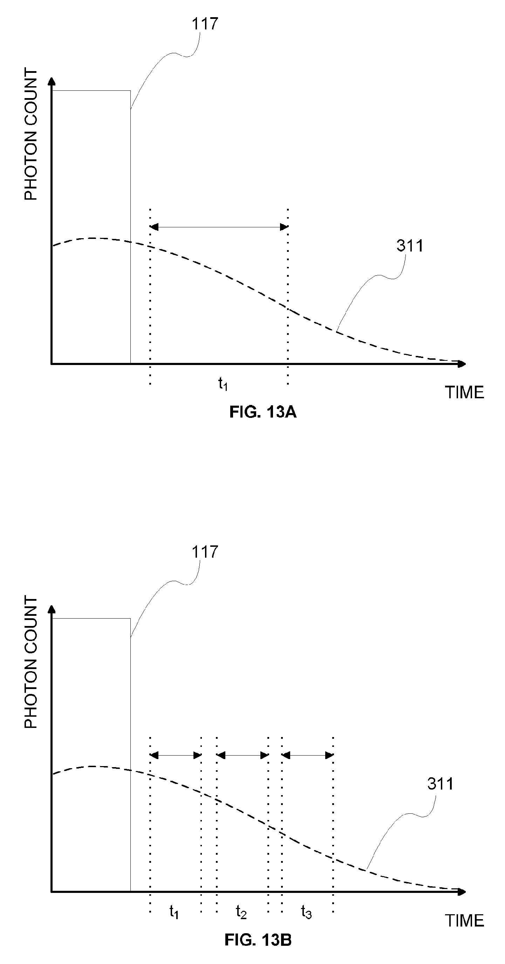

Figure 13A illustrates exemplary principles of the method for utilising a time-resolved measurement. An excitation pulse 117 is emitted to the wells of the device. The excitation pulse (as well as any background radiation) is short-living (typically less than 100 µs), whereas the emission peak of the excited luminophore label is long-living (typically hundreds of microseconds). The emission radiation 311 is advantageously measured after the excitation radiation, when any background radiation is typically already decayed, such as during 200-800 µs (*t₁*) after the excitation pulse. According to another embodiment illustrated in Figure 13B the emission radiation 311 can be determined in a plurality of parts (*t₁, t₂, t₃*), whereupon the attenuation of the emission can also be determined possibly describing a character of the label/sample.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. Especially the features of the different devices depicted in Figures can be combined with each other, such as the cavities can be provided either only one layer or both layers even though they would be depicted elsewhere in th Figures. In addition all the devices described in the Figures 1-12 may comprise also pipette-like space as well as the space comprising luminophore labels, different kinds of fluidic channels with or without filters and the layers with or without the lenses even though it would be described elsewhere in the Figures. Another variation to the structures described so far would be the provision of two optical paths for emission radiation: for example, two detectors could be used, each located at a different side of the device and each receiving emission radiation coupled out of the light conducting layer through its own light output window.

## Claims

1. A device for holding a sample for optical examination, the device comprising:
- a body that defines a plurality of spots or wells,
- within one or more of said spots or wells, one or more non-specific interacting surfaces capable of non-specific binding of at least one of:
said sample, a luminophore label, a combination of said sample and
said luminophore label,
- a light conducting layer comprising material that is essentially non-transparent to optical radiation at a first wavelength that is capable of luminophore excitation, and essentially transparent to optical radiation at a second wavelength, and
- a light input window for coupling into said light conducting layer optical radiation at said second wavelength originating from said spots or wells, and a light output window for coupling out optical radiation from said light conducting layer.

2. A device according to claim 1, comprising a structural layer that at least partly delimits the volume of said spots or wells and is essentially transparent to optical radiation at said first wavelength.

3. A device according to claim 2, wherein said structural layer is the same as said body, so that said structural layer defines said spots or wells.

4. A device according to claim 1, wherein said light conducting layer is the same as said body, so that said light conducting layer defines said spots or wells.

5. A device according to claim 4, comprising a structural layer that covers said spots or wells defined by said light conducting layer, and is essentially transparent to optical radiation at said first wavelength.

6. A device according to any of claims 2 or 5, wherein said structural layer comprises acrylate, such as polymethylmethacrylate.

7. A device according to any previous claim, comprising an optical filter coupled to said light output window for filtering optical radiation that is coupled out from said light conducting layer.

8. A device according to any previous claim, wherein said material that is essentially non-transparent to optical radiation at a first wavelength that is capable of luminophore excitation, and essentially transparent to optical radiation at a second wavelength, is polycarbonate.

9. A device according to any previous claim, wherein at least one part of the device defines fluidic channels coupled to said spots or wells, and at least one fluidic channel has an opening at an outer surface of the device for allowing a liquid sample to flow from outside of said device into said spots or wells.

10. A device according to claim 9, comprising an internal space with a changeable inner volume, coupled to said opening through said at least one fluidic channel, with at least some of said spots or wells being located along a fluidic channel route between said internal space and said opening.

11. A device according to any of claims 9 or 10, comprising a particle filter in at least one of said fluidic channels.

12. A device according to any previous claim, wherein at least one spot or well comprises a specific interacting surface capable of specific binding of at least one substance.

13. A device according to any previous claim, comprising at least one of the following:
- a luminophore label preparatorily introduced in a spot or well before a sample,
- a storage space comprising a luminophore label, along a sample introduction route configured to lead a liquid sample into at least some of said spots or wells.

14. A device according to any previous claim, wherein a part of the device that is coincident with a spot or well and transparent to optical radiation at at least one wavelength defines a lens for focusing optical radiation either directed to or originating from the corresponding spot or well.

15. Use of a device according to any previous claim for holding a sample for optical examination.
